# EUROPÄISCHE PATENTSCHRIFT

(11) **EP 4 349 650 B1**
(45) Veröffentlichungstag und Bekanntmachung des Hinweises auf die Patenterteilung: **04.11.2026**
(21) Anmeldenummer: 23201622.0
(22) Anmeldetag: 04.10.2023
(51) Int. Cl.: B60P 1/28

(54) **SEITENWAND-ANORDNUNG FÜR LASTENAUFBAU**
SIDE WALL ASSEMBLY FOR LOAD CONSTRUCTION
AGENCEMENT DE PAROI LATÉRALE POUR STRUCTURE DE CHARGE

(30) Priorität: 05.10.2022 DE 102022125727
(43) Veröffentlichungstag der Anmeldung: 10.04.2024
(73) Patentinhaber: Franz Xaver Meiller Fahrzeug- und Maschinenfabrik - GmbH & Co KG, 80997 München (DE)
(72) Erfinder: RIEDL, Stefan, 80638 München (DE)
(74) Vertreter: Weickmann & Weickmann PartmbB

(56) Entgegenhaltungen:
- WO-A1-2016/142194
- IT-A1- AN20 110 073
- US-A- 6 022 068
- US-A1- 2022 055 779

## Beschreibung

Die vorliegende Erfindung betrifft eine Seitenwandanordnung für einen Kipperaufbau mit einer von vorne nach hinten verlaufenden Längsrichtung und einer Höhenrichtung, einen Kipperaufbau, umfassend zwei derartige Seitenwandanordnungen, sowie ein Kipperfahrzeug und einen Kipp-Anhänger, jeweils umfassend einen entsprechenden Kipperaufbau.

Es ist aus dem Stand der Technik bekannt, Kipperaufbauten für Kipperfahrzeuge oder Kipp-Anhänger mittels einer Mehrzahl von länglichen, parallel zueinander angeordneten Wandelementen aufzubauen, die häufig auch als "Planken" bezeichnet werden. Diese Planken sind in der Regel als Hohlprofile gebildet, die eine ausreichende Festigkeit mit einem geringen Gewicht und vermindertem Materialbedarf verbinden.

Hierbei ist es üblich, die Wandelemente bezogen auf eine ungekippte Position des Kipperaufbaus, entsprechend einer Konfiguration mit horizontal ausgerichteter Ladefläche, in welcher sich das entsprechende Fahrzeug fortbewegen kann, vertikal oder horizontal anzuordnen und miteinander zu verbinden. Ferner sind insbesondere bei manchen Ausführungsformen von Kipperfahrzeugen und Kipp-Anhängern, welche eine von unten nach oben betrachtet in Längsrichtung nach vorne geneigte Stirnwand und gegebenenfalls auch Heckwand aufweisen, die entsprechenden länglichen Wandelemente in ähnlicher Weise gegenüber der Vertikalen derart unter einem Winkel angeordnet, dass sie sich von unten nach oben unter einem Winkel bezogen auf die Längsrichtung schräg nach vorne erstrecken, um den entsprechenden Winkel der Stirnwand und gegebenenfalls der Heckwand nachzubilden und somit einen vereinfachten Aufbau der entsprechenden Seitenwand zu ermöglichen.

Hierbei sind sämtliche im Vorhergehenden und auch im Folgenden angesprochenen definierten Richtungen stets auf die bereits beschriebene Konfiguration des entsprechenden Kipperaufbaus bezogen, in welcher die zugehörige Ladefläche horizontal ausgerichtet ist und somit der Kipperaufbau in der üblichen Fahrposition des entsprechenden Fahrzeugs befindlich ist.

Bei der Auslegung derartiger Seitenwandanordnungen für Kipperaufbauten ist zu beachten, dass die im Betrieb davon zu erwartende Belastung der entsprechenden Wandelemente abhängig von ihrer Position bezogen auf den Kipperaufbau und insbesondere die Ladefläche unterschiedlich sein kann. Insbesondere zeigt sich, dass im Heckbereich des Kipperaufbaus ein höherer Verschleiß der entsprechenden Wandelemente zu beobachten ist, da bei einem Kippen und Abladen von Schüttgut aus dem Kipperaufbau bzw. von der Ladefläche in diesem Bereich ein Schüttkegel entsteht und demzufolge verstärkte Abrasion und mechanische Verformung insbesondere der Innenseiten der entsprechenden Wandelemente zu beobachten sind. Um diesem Problem zu begegnen, wurden bisher häufig Verstärkungsplatten vorgesehen, welche zusätzlich zu den Wandelementen in den entsprechenden besonders betroffenen Bereichen der entsprechenden Kipperaufbauten angeordnet worden sind, um einen vorzeitigen Verschleiß der Wandelemente zu verhindern oder wenigstens zu reduzieren. Dies bedeutet jedoch einen größeren konstruktiven Aufwand sowie einen erhöhten Materialeinsatz, was sich beides in höheren Kosten für die entsprechende Seitenwandanordnung und damit den diese umfassenden Kipperaufbau niederschlagen wird.

Beispielhaft sei in diesem Zusammenhang auf die US 2022/0055779 A1 hingewiesen, welche ein Kipperfahrzeug lehrt, in welchem außerhalb einer Seitenwand des Kipperaufbaus schräg stehenden Balken vorgesehen sind. Ferner sei der Vollständigkeit halber auf die IT AN20 110 073 A1, die US 6 022 068 A und die WO 2016/142194 A1 verwiesen.

Es ist demzufolge die Aufgabe der vorliegenden Erfindung, eine Seitenwandanordnung für einen Kipperaufbau bereitzustellen, welche die oben genannten Probleme des bekannten Stands der Technik ausräumt und gleichzeitig kostengünstig und mit geringem Aufwand herzustellen ist.

Erfindungsgemäß wird diese Aufgabe durch eine gattungsgemäße Seitenwandanordnung für einen Kipperaufbau gelöst, in welcher die einzelnen Wandelemente gegenüber der Höhenrichtung derart geneigt sind, dass sie sich von unten nach oben unter einem Winkel bezogen auf die Längsrichtung schräg nach hinten erstrecken. Durch diese Maßnahme wird es ermöglicht, einen bei einem Kippen des Kipperaufbaus und einem Abladen von Schüttgut entstehenden Schüttkegel nachzubilden, und demzufolge befinden sich eine geringere Anzahl von Wandelementen im Bereich dieses Schüttkegels und sind somit einer erhöhten Abnutzung ausgesetzt. Dies ermöglicht es wiederum, in einer effizienten Weise geeignete Gegenmaßnahmen zu treffen, die demzufolge unmittelbar an den entsprechenden Wandelementen vorgenommen werden können und einen geringeren konstruktiven Aufwand sowie Materialeinsatz verlangen. Ferner wird durch die vorliegende Erfindung ermöglicht, im Fall einer Notwendigkeit eines Ersetzens von abgenutzten Wandelementen im Bereich der höchsten Abnutzung eine geringere Anzahl von Wandelementen austauschen zu müssen, was wiederum die laufenden Betriebskosten des Kipperaufbaus über dessen gesamte Lebensdauer verringern kann.

Hierbei versteht sich, dass die erfindungsgemäße Seitenwandanordnung für unterschiedliche Kipperfahrzeuge und Kipp-Anhänger geeignet ist, insbesondere für verschiedenen Baulängen davon. Beispielsweise können die entsprechenden Seitenwandanordnungen in allen momentan üblichen Längen derartiger Aufbauten hergestellt werden, insbesondere im Bereich von 7600 mm bis 10600 mm, aber prinzipiell auch für kürzere oder längere Aufbauten.

In der erfindungsgemäßen Seitenwandanordnung sind wenigstens einige der Wandelemente als längliche Hohlprofile ausgeführt, welche dementsprechend eine nach außen weisende Außenwand sowie eine zu der Ladefläche des resultierenden Kipperaufbaus weisende Innenwand und einen davon umschlossenen Hohlraum aufweisen. Derartige Hohlprofile können hinsichtlich ihrer Abmessungen und sonstiger Parameter an den konkreten Anwendungsfall und die zu erwartenden Belastungen im Betrieb davon angepasst werden, beispielsweise hinsichtlich Dicken und Materialien von Wänden, dem Volumen des umschlossenen Hohlraums, etc..

Weiterhin kann der Winkel der Wandelemente gegenüber der Höhenrichtung zwischen etwa 39 Grad und etwa 55 Grad, vorzugsweise zwischen 40 Grad und 52 Grad betragen. Durch diesen Wertebereich werden unterschiedliche mögliche Ausgestaltungen von Kipperaufbauten abgedeckt, wobei ferner ebenfalls auf den maximalen Neigungswinkel des Kipperaufbaus gegenüber der Horizontalen in dem jeweiligen Fahrzeug abhängig von der verwendeten Kippanordnung Bezug genommen werden kann.

Erfindungsgemäß können die angesprochenen Wandelemente jeweils mit benachbarten Wandelementen verbunden, insbesondere verschweißt, sein und/oder die Seitenwandordnung kann ferner wenigstens ein Außenprofil umfassen, mit welchem die Wandelemente jeweils verbunden sind. Hierbei besteht eine häufig zur Herstellung gattungsgemäßer Seitenwandanordnungen eingesetzte Technik darin, die einzelne Wandelemente zunächst einmal lose miteinander zu verbinden, bspw. zusammenzustecken, und dann anschließend miteinander zu verschweißen, um letztendlich die fertig zusammengebaute Seitenwandanordnung zu erhalten.

Um die oben bereits angesprochene Verstärkung der Seitenwandanordnung in dem einer höchsten Abnutzung ausgesetzten hinteren Bereich zu erzielen, kann an unterschiedliche Maßnahmen gedacht werden. Beispielsweise kann die Seitenwandanordnung an ihrem auf die Längsrichtung bezogenen hinteren Ende wenigstens ein Wandelement mit einer verglichen mit weiter vorne vorgesehenen Wandelementen erhöhten Wanddicke umfassen. Die entsprechende Wanddicke kann hierbei insbesondere auf die innere Wand bei einer Ausführung als Hohlprofil bezogen sein, sodass die Gesamtdicke des entsprechenden Wandelements durch eine entsprechende Verkleinerung des davon begrenzten Hohlraums konstant gehalten werden kann, wodurch wiederum eine ebene Innenwand auch bei Verbindung von Wandelementen mit unterschiedlichen Wanddicken an ihrer Innenseite erzielt werden kann.

Eine weitere Möglichkeit zur Verstärkung der Seitenwandanordnung in dem besonders beanspruchten Bereich kann darin bestehen, dass an dem auf die Längsrichtung bezogenen hinteren Ende der Seitenwandanordnung wenigstens ein Wandelement mit einer geringeren Breite vorgesehen sein kann, was ebenfalls insbesondere in Ausführungsformen mit als Hohlprofil gebildeten Wandelementen zu einer entsprechenden Verstärkung der Seitenwandanordnung an dieser Stelle führen kann, da auf diese Weise die innerhalb der Hohlprofile vorliegenden Hohlräume verkleinert werden und insgesamt mehr Material zur Verstärkung der Seitenwandanordnung an dieser Stelle zur Verfügung steht.

Ferner könnte ebenfalls daran gedacht werden, die Wandelemente an der entsprechenden Stelle mit einem härteren Material wenigstens an ihrer Innenseite vorzusehen, um sie auf diese Weise vor erhöhtem Verschleiß zu schützen. Da erfindungsgemäß die Wandelemente der Seitenwandanordnung wenigstens teilweise aus Aluminium oder einer Aluminiumlegierung hergestellt sein können, kann beispielsweise an besonders beanspruchten Wandelementen eine härtere Legierung oder ein insgesamt härteres Material zur Verstärkung vorgesehen werden.

Wie bereits oben angedeutet, betrifft die vorliegende Erfindung ferner einen Kipperaufbau, umfassend eine Ladefläche, eine Stirnwand, eine schwenkbare und/oder pendelbare Heckwand und zwei einander gegenüberliegende erfindungsgemäße Seitenwandanordnungen der eben beschriebenen Art.

Des Weiteren betrifft die vorliegende Erfindung ein Kipperfahrzeug, umfassend einen Fahrzeugkörper und einen gegenüber dem Fahrzeugkörper mittels einer Kippanordnung kippbaren derartigen Kipperaufbau sowie einen Kipp-Anhänger, umfassend einen Anhängerkörper und einen gegenüber dem Anhängerkörper mittels einer Kippanordnung kippbaren derartigen Kipperaufbau.

Sowohl in dem erfindungsgemäßen Kipperfahrzeug als auch dem erfindungsgemäßen Kipp-Anhänger kann der jeweilige Winkel der Wandelemente der Seitenwandanordnungen derart gewählt sein, dass sie in einem maximal gekippten Zustand des Kipperaufbaus gegenüber dem Fahrzeugkörper bzw. dem Anhängerkörper im Wesentlichen horizontal verlaufen.

Weitere Vorteile und Merkmale der vorliegenden Erfindung werden aus der nachfolgenden Beschreibung einer Ausführungsform davon noch deutlicher, wenn diese zusammen mit den beilliegenden Figuren betrachtet wird. Diese zeigen im Einzelnen:
- Figur 1: einen erfindungsgemäßen Kipp-Anhänger in einer Seitenansicht, wobei sich der entsprechende Kipperaufbau in einer horizontalen Position befindet; und
- Figur 2: den Kipp-Anhänger aus Figur 1 in einem Zustand, in welchem sich der Kipperaufbau in einem maximal gekippten Zustand befindet.

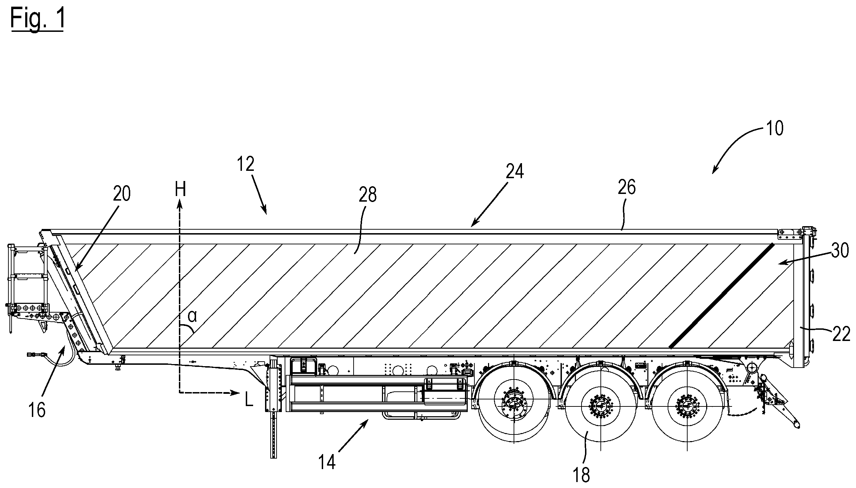

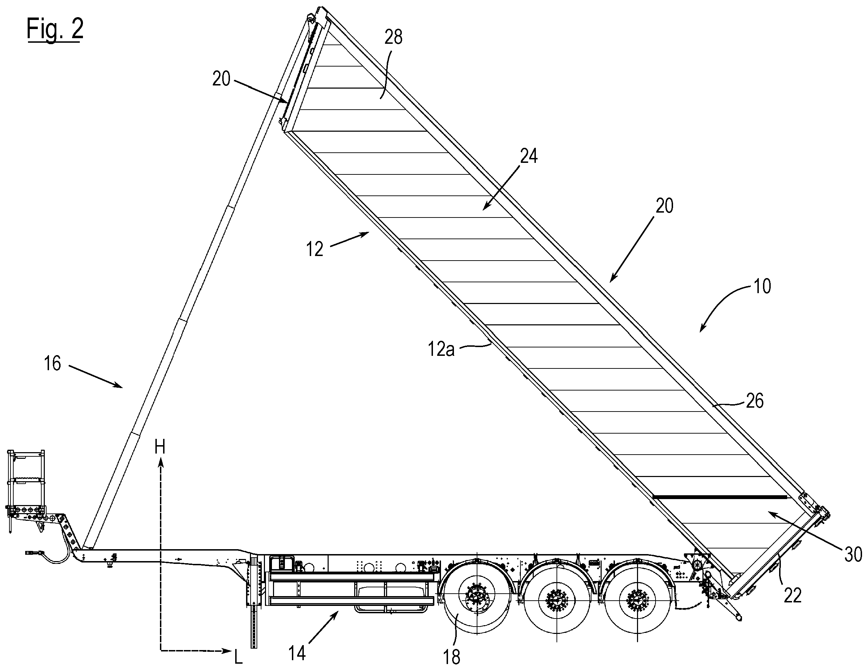

In Figur 1 ist zunächst einmal ein erfindungsgemäßer Kipp-Anhänger in einer Seitenansicht gezeigt und ganz allgemein mit dem Bezugszeichen 10 bezeichnet. Hierbei umfasst der Kipp-Anhänger 10 einen Kipperaufbau 12 und einen Anhängerkörper 14, wobei ferner eine Kippanordnung 16 vorgesehen ist, welche den Kipperaufbau 12 aus der in Figur 1 gezeigten horizontalen Position in die in Figur 2 gezeigte gekippte Position verlagern kann.

Ferner sind an dem Anhängerkörper 14 eine Mehrzahl von Rädern 18 vorgesehen, mit welchen der Kipp-Anhänger auf einem Untergrund aufsteht und während einer Fortbewegung rollen kann. Hierbei versteht sich, dass der in den Figuren 1 und 2 gezeigte Kipperaufbau 12 in analoger Weise ebenfalls in einem erfindungsgemäßen Kipperfahrzeug zum Einsatz kommen kann, welches dementsprechend dann zusätzlich mit einem Führerhaus und weiteren Rädern sowie zusätzlichen funktionalen Komponenten ausgestattet wäre.

Hierbei ist der Kipperaufbau 12 durch eine lediglich in Figur 2 gekennzeichnete Ladefläche 12a, eine Stirnwand 20, eine schwenkbare und/oder pendelbare Heckwand 22 sowie zwei Seitenwandanordnungen 24 gebildet, wobei von den beiden Seitenwandanordnungen 24 nur die linke Seitenwandanordnung 24 in den Figuren sichtbar ist. Diese Seitenwandanordnung 24 umfasst ein Außenprofil 26 sowie eine Mehrzahl von länglichen und parallel zueinander angeordneten Wandelementen 28, welche gegenüber der Höhenrichtung H des Kipp-Anhängers 10 derart geneigt sind, dass es sich von unten nach oben unter einem Winkel α bezogen auf die Längsrichtung L des Kipp-Anhängers 10 schräg nach hinten erstrecken. Hierbei sind die Wandelemente 28 als Hohlprofile ausgebildet, welche beispielsweise aus einer Aluminiumlegierung gefertigt sein können.

In der dargestellten Ausführungsform ist der Winkel α gerade so gewählt, dass in dem in Figur 2 gezeigten Zustand eines maximalen Kippens des Kipperaufbaus 12 gegenüber dem Fahrzeugkörper 14 die Wandelemente 28 horizontal ausgerichtet sind. Auf diese Weise ergibt sich im hinteren Bereich der Seitenwandanordnung 24 eine Anordnung von in der gezeigten Ausführungsform drei hinteren Wandelementen 30, welche einen Schüttkegel von auf der Ladefläche aufgenommenen und in der Konfiguration aus Figur 2 abzuladenden Schüttgut nachbilden, wie durch eine verdickte Linie angedeutet ist. Hierbei könnte je nach Auslegung des Kipperaufbaus 12 auch eine größere oder kleinere Anzahl derartiger hinterer Wandelemente 30 vorgesehen werden, so dass die entsprechende verdickte Linie dann in Längsrichtung L nach vorne oder hinten wandern würde.

Da diese hinteren Wandelemente 30 aufgrund der Ausbildung des Schüttkegels einer erhöhten Belastung und Abnutzung ausgesetzt sind, können sie durch verschiedene Maßnahmen verstärkt bzw. widerstandsfähiger gemacht werden. Beispielsweise könnte ein härteres Material für wenigstens die Innenseiten der hinteren Wandelemente 30 vorgesehen sein und/oder eine erhöhte Wanddicke, insbesondere an der Innenwand der entsprechenden Wandelemente 30. In alternativen Ausführungsformen könnte ferner an dieser Stelle auf eine geringere Breite bei den Wandelementen 30 zurückgegriffen werden, um die in den Wandelementen vorgesehenen Hohlräume zu verkleinern und insgesamt die Struktur davon zu verstärken. Auf diese Weise wird mittels der erfindungsgemäßen Seitenwandanordnung eine höhere Lebensdauer und eine auf die gesamte Einsatzzeit des entsprechenden Kipp-Anhängers gerechnet kostengünstigere Ausführung erzielt.

## Patentansprüche

1. Seitenwandanordnung (24) für einen Kipperaufbau (12) mit einer von vorne nach hinten verlaufenden Längsrichtung (L) und einer Höhenrichtung (H), umfassend:
- eine Mehrzahl von länglichen, parallel zueinander angeordneten Wandelementen (28, 30);
wobei die einzelnen Wandelemente (28, 30) gegenüber der Höhenrichtung (H) derart geneigt sind, dass sie sich von unten nach oben unter einem Winkel (α) bezogen auf die Längsrichtung (L) schräg nach hinten erstrecken, **dadurch gekennzeichnet, dass**
wenigstens einige der Wandelemente (28, 30) als längliche Hohlprofile ausgeführt sind, welche eine nach außen weisende Außenwand sowie eine zu einer Ladefläche (12a) des Kipperaufbaus (12) weisende Innenwand und einen davon umschlossenen Hohlraum aufweisen.

2. Seitenwandanordnung (24) nach einem der vorhergehenden Ansprüche, wobei der Winkel der Wandelemente (28, 30) gegenüber der Höhenrichtung (H) zwischen etwa 39 Grad und etwa 55 Grad, vorzugsweise zwischen 40 Grad und 52 Grad beträgt.

3. Seitenwandanordnung (24) nach einem der vorhergehenden Ansprüche, wobei die Wandelemente (28, 30) jeweils mit benachbarten Wandelementen (28, 30) verbunden, insbesondere verschweißt, sind und/oder die Seitenwandanordnung (24) ferner wenigstens ein Außenprofil (26) umfasst, mit welchem die Wandelemente (28, 30) verbunden sind.

4. Seitenwandanordnung (24) nach einem der vorhergehenden Ansprüche, wobei an ihrem auf die Längsrichtung (L) bezogen hinteren Ende wenigstens ein Wandelement (30) mit einer erhöhten Wanddicke vorgesehen ist.

5. Seitenwandanordnung (24) nach einem der vorhergehenden Ansprüche, wobei an ihrem auf die Längsrichtung (L) bezogen hinteren Ende wenigstens ein Wandelement mit einer geringeren Breite vorgesehen ist.

6. Seitenwandanordnung (24) nach einem der vorhergehenden Ansprüche, wobei die Wandelemente (28, 30) wenigstens teilweise aus Aluminium oder einer Aluminiumlegierung hergestellt sind.

7. Kipperaufbau (12), umfassend eine Ladefläche (12a), eine Stirnwand (20), eine schwenkbare und/oder pendelbare Heckwand (22) und zwei Seitenwandanordnungen (24) nach einem der vorhergehenden Ansprüche.

8. Kipperfahrzeug, umfassend einen Fahrzeugkörper und einen gegenüber dem Fahrzeugkörper mittels einer Kippanordnung (16) kippbaren Kipperaufbau (12) nach Anspruch 7.

9. Kipperfahrzeug nach dem vorhergehenden Anspruch, wobei der Winkel (α) der Wandelemente (28, 30) der Seitenwandanordnungen (24) derart gewählt ist, dass sie in einem maximal gekippten Zustand des Kipperaufbaus (12) im Wesentlichen horizontal verlaufen.

10. Kipp-Anhänger (10), umfassend einen Anhängerkörper (14) und einen gegenüber dem Anhängerkörper (14) mittels einer Kippanordnung (16) kippbaren Kipperaufbau (12) nach Anspruch 7.

11. Kipp-Anhänger (10) nach dem vorhergehenden Anspruch, wobei der Winkel (α) der Wandelemente (28, 30) der Seitenwandanordnungen (24) derart gewählt ist, dass sie in einem maximal gekippten Zustand des Kipperaufbaus (12) im Wesentlichen horizontal verlaufen.

## Claims

1. Side wall arrangement (24) for a tipper body (12) having a longitudinal direction (L) extending from front to rear and a height direction (H), comprising:
• a plurality of elongate wall elements (28, 30) arranged parallel to one another;
wherein the individual wall elements (28, 30) are inclined relative to the height direction (H) such that they extend obliquely rearward from bottom to top at an angle (α) with respect to the longitudinal direction (L), **characterized in that** at least some of the wall elements (28, 30) are configured as elongate hollow profiles which have an outwardly facing outer wall, an inner wall facing towards a loading area (12a) of the tipper body (12), and a cavity enclosed thereby.

2. Side wall arrangement (24) according to any one of the preceding claims, wherein the angle of the wall elements (28, 30) relative to the height direction (H) is between approximately 39 degrees and approximately 55 degrees, preferably between 40 degrees and 52 degrees.

3. Side wall arrangement (24) according to any one of the preceding claims, wherein the wall elements (28, 30) are each connected, in particular welded, to adjacent wall elements (28, 30), and/or the side wall arrangement (24) further comprises at least one outer profile (26) to which the wall elements (28, 30) are connected.

4. Side wall arrangement (24) according to any one of the preceding claims, wherein at its rear end with respect to the longitudinal direction (L), at least one wall element (30) having an increased wall thickness is provided.

5. Side wall arrangement (24) according to any one of the preceding claims, wherein at its rear end with respect to the longitudinal direction (L), at least one wall element having a reduced width is provided.

6. Side wall arrangement (24) according to any one of the preceding claims, wherein the wall elements (28, 30) are at least partially manufactured from aluminium or an aluminium alloy.

7. Tipper body (12), comprising a loading area (12a), a front wall (20), a pivotable and/or pendulously mounted rear wall (22), and two side wall arrangements (24) according to any one of the preceding claims.

8. Tipper vehicle, comprising a vehicle body and a tipper body (12) according to claim 7, which is tiltable relative to the vehicle body by means of a tipping arrangement (16).

9. Tipper vehicle according to the preceding claim, wherein the angle (α) of the wall elements (28, 30) of the side wall arrangements (24) is selected such that they extend substantially horizontally in a maximally tilted state of the tipper body (12).

10. Tipping trailer (10), comprising a trailer body (14) and a tipper body (12) according to claim 7, which is tiltable relative to the trailer body (14) by means of a tipping arrangement (16).

11. Tipping trailer (10) according to the preceding claim, wherein the angle (α) of the wall elements (28, 30) of the side wall arrangements (24) is selected such that they extend substantially horizontally in a maximally tilted state of the tipper body (12).

## Revendications

1. Un agencement de parois latérales (24) pour une benne basculante (12) présentant une direction longitudinale (L) s'étendant de l'avant vers l'arrière et une direction verticale (H), comprenant :
- une pluralité d'éléments de paroi allongés (28, 30) disposés parallèlement les uns aux autres,
dans lequel les différents éléments de paroi (28, 30) sont inclinés par rapport à la direction de hauteur (H) de telle sorte qu'ils s'étendent de bas en haut en formant un angle (α) par rapport à la direction longitudinale (L) et en s'inclinant vers l'arrière,
caractérisée en ce en ce que
au moins certains des éléments de paroi (28, 30) sont réalisés sous forme de profilés creux allongés, qui présentent une paroi extérieure tournée vers l'extérieur ainsi qu'une paroi intérieure tournée vers une surface de chargement (12a) de la benne basculante (12) et une cavité entourée par celles-ci.

2. L'agencement de parois latérales (24) selon l'une des revendications précédentes, dans lequel l'angle formé par les éléments de paroi (28, 30) par rapport à la direction de la hauteur (H) est compris entre environ 39 degrés et environ 55 degrés, de préférence entre 40 degrés et 52 degrés.

3. L'agencement de parois latérales (24) selon l'une des revendications précédentes, dans lequel les éléments de paroi (28, 30) sont chacun reliés à des éléments de paroi (28, 30) adjacents et/ou l'agencement de parois latérales (24) comprend en outre au moins un profilé extérieur (26) auquel les éléments de paroi (28, 30) sont reliés.

4. L'agencement de parois latérales (24) selon l'une des revendications précédentes, dans lequel au moins un élément de paroi (30) présentant une épaisseur de paroi accrue est prévu à son extrémité arrière par rapport à la direction longitudinale (L).

5. L'agencement de parois latérales (24) selon l'une des revendications précédentes, dans lequel au moins un élément de paroi présentant une largeur réduite est prévu à son extrémité arrière par rapport à la direction longitudinale (L).

6. L'agencement de parois latérales (24) selon l'une des revendications précédentes, dans lequel les éléments de paroi (28, 30) sont au moins partiellement fabriqués en aluminium ou en un alliage d'aluminium.

7. Une benne basculante (12) comprenant une surface de chargement (12a), une paroi avant (20), une paroi arrière (22) pivotante et/ou oscillante et deux agencements de parois latérales (24) selon l'une des revendications précédentes.

8. Un véhicule à benne basculante, comprenant une carrosserie et une benne basculante (12) pouvant basculer par rapport à la carrosserie au moyen d'un dispositif de basculement (16), selon la revendication 7.

9. Le véhicule à benne basculante selon la revendication précédente, dans lequel l'angle (α) des éléments de paroi (28, 30) des agencements de parois latérales (24) est choisi de telle sorte qu'ils s'étendent sensiblement à l'horizontale lorsque la benne basculante (12) est dans sa position de basculement maximale.

10. Une remorque basculante (10) comprenant un châssis de remorque (14) et une benne basculante (12) pouvant basculer par rapport au châssis de remorque (14) au moyen d'un dispositif de basculement (16), selon la revendication 7.

11. La remorque basculante (10) selon la revendication précédente, dans laquelle l'angle (α) des éléments de paroi (28, 30) des agencements de parois latérales (24) est choisi de telle sorte qu'ils s'étendent sensiblement à l'horizontale lorsque la benne basculante (12) est dans sa position de basculement maximale.
